# FASCICULE DE BREVET EUROPEEN

(11) **EP 1 577 137 B1**
(45) Date de publication et mention de la délivrance du brevet: **23.04.2008**
(21) Numéro de dépôt: 05290298.8
(22) Date de dépôt: 10.02.2005
(51) Int. Cl.: B60J 10/08

(54) **Profilé en au moins un élastomère ou un, plastomère, notamment destiné à équiper un ouvrant ou un encadrement d'ouvrant, et son procédé de fabrication**
Profil aus zumindest einem Elastomer oder einem Plastomer, insbesondere bestimmt zur Ausrüstung einer Öffnung oder Einfassung einer Öffnung, und zugehöriges Herstellungsverfahren
Profile made of at least an elastomer or a plastomer, particulary designed for the equipment of an opening or framing an opening, and process for its manufacture

(30) Priorité: 26.02.2004 FR 0401940
(43) Date de publication de la demande: 21.09.2005
(73) Titulaire: Metzeler Automotive Profile Systems Transieres, 92000 Nanterre (FR)
(72) Inventeur: Dron, Bernard, 92800 Puteaux (FR)
(74) Mandataire: Roger, Walter

(56) Documents cités:
- EP-A- 0 540 183
- EP-A- 0 553 018
- EP-A- 0 698 516
- EP-A- 1 016 558
- EP-A- 1 338 456
- FR-A- 2 657 292
- FR-A- 2 835 303
- US-A- 5 840 401

## Description

La présente invention concerne un nouveau profilé en au moins un élastomère ou un plastomère, notamment destiné à équiper un ouvrant ou un encadrement d'ouvrant. L'invention concerne également un procédé de fabrication de ce nouveau profilé.

On sait que les ouvrants ou les encadrements d'ouvrants de véhicules automobiles sont généralement équipés d'un profilé à section transversale en U ou en Ω destiné à coiffer en la pinçant une partie saillante de l'ouvrant ou de l'encadrement, et dont est solidaire un profilé tubulaire d'étanchéité, qui est comprimé entre l'ouvrant, par exemple une porte ou un coffre d'automobile, et son encadrement, en position de fermeture de cet ouvrant. Le profilé tubulaire peut être solidaire de la face externe de la base du U ou de l'Ω, ou d'une branche latérale du U ou de l'Ω et faire saillie vers l'extérieur.

Afin d'accroître l'effet de pincement du profilé à section en U ou en Ω, on utilise fréquemment des armatures de renfort, généralement métalliques ou en matière plastique (souvent rigide), noyées au moins en partie dans le plastomère ou l'élastomère formant pince.

Il arrive cependant souvent que, pour diverses raisons, en particulier pour alléger le profilé et pour le rendre moins coûteux, on n'utilise pas d'armature de renfort et, dans ce cas, on est amené, par exemple, à utiliser, pour réaliser le profilé formant pince, un ou des matériaux relativement rigides, en vue de retrouver des propriétés mécaniques comparables à celles des profilés à armatures.

La mise à la forme souhaitée de ces profilés en est toutefois compliquée, car elle nécessite une opération supplémentaire, comme par exemple un conformage à chaud, suivi d'un refroidissement en forme. On peut aussi prévoir, pour la mise en forme, une assistance sur la chaîne de montage, par exemple un préchauffage localisé du profilé formant pince, en vue d'assouplir temporairement la partie destinée à être fixée sur une feuillure.

La présente invention vise à se dispenser de ces opérations complexes et coûteuses en modifiant la structure du profilé, en fonction de l'emplacement occupé par ce profilé sur l'ouvrant ou l'encadrement d'ouvrant, ou plus généralement en fonction de la forme finale souhaitée pour le profilé, par dépôt localisé sur celui-ci d'un matériau, coextrudé avec le profilé, et qui, après avoir été chauffé, par exemple pour les opérations usuelles de vulcanisation, subit un fort retrait au refroidissement, ce qui génère des contraintes telles que le profilé se courbe dès qu'il devient libre pour adopter un profil proche de celui souhaité, par exemple de celui des feuillures qu'il est appelé à équiper ultérieurement.

On peut accentuer ce phénomène en accroissant localement l'épaisseur du matériau à fort retrait au refroidissement au détriment de celle du matériau constitutif du profilé ou, si cela est possible, en créant une excroissance locale, qui déporte le centre de gravité de la section considérée, telle qu'un tube ou un profilé à section en U ou en Ω.

L'invention a par conséquent pour premier objet un procédé de fabrication par extrusion d'un profilé en au moins un élastomère ou un plastomère, dépourvu d'armature de renfort et destiné à équiper un ouvrant ou un encadrement d'ouvrant, notamment d'un véhicule automobile, ce procédé étant caractérisé en ce qu'avec ce profilé est coextrudé un matériau en plastomère ou en élastomère qui recouvre localement la surface externe du profilé et présente au refroidissement, soit après la phase de coextrusion, soit après une phase ultérieure de chauffage, par exemple une phase de vulcanisation, un retrait au refroidissement sensiblement supérieur à celui de matériau dont est constitué le profilé et apte à conférer à ce dernier une contrainte telle qu'après refroidissement, il se courbe localement en adoptant ainsi une forme proche de celle que l'on souhaite lui conférer.

L'invention a également pour objet un profilé en au moins un élastomère ou un plastomère dépourvu d'armature de renfort et destiné à équiper un ouvrant ou un encadrement d'ouvrant, notamment d'un véhicule automobile, ce profilé étant caractérisé en ce qu'il comporte en un ou des emplacements localisés de sa surface externe un plastomère ou un élastomère venu de coextrusion avec le profilé et présentant après le chauffage associé à l'extrusion ou après une phase de chauffage ultérieure, par exemple de vulcanisation, un retrait au refroidissement sensiblement supérieur à celui du profilé.

Le profilé conforme à l'invention peut être un profilé à section transversale en U ou en Ω du type mentionné ci-dessus et, lorsque le profilé tubulaire est attenant à la base du U ou de l'Ω, le matériau à fort retrait au refroidissement peut être appliqué sur la face externe d'au moins une partie des deux branches du U ou de l'Ω de la section du profilé, notamment au voisinage de l'extrémité de ces branches, lorsqu'on désire imprimer au profilé une courbure en direction de cette ou ces extrémités.

Dans ce même type de profilé, le matériau à fort retrait au refroidissement peut être appliqué sur la face externe de la base du U ou de l'Ω du profilé formant pince, à l'intérieur du profilé tubulaire d'étanchéité, ou encore sur une face externe du U ou de l'Ω du profilé formant pince, de part et d'autre de l'une des lignes de raccordement du profilé tubulaire à ce profilé formant pince.

Enfin, dans le cas où le profilé tubulaire est attenant à une branche latérale du U ou de l'Ω, le matériau à fort retrait au refroidissement peut être appliqué sur la base du U ou de l'Ω et déborder latéralement sur la face externe de la portion contiguë du profilé tubulaire, au niveau où celui-ci se raccorde à la branche associée de la partie formant pince.

Le profilé conforme à l'invention peut aussi être un simple profilé tubulaire recourbé localement, comme on le verra ci-après.

Le profilé formant pince ou tubulaire peut être par exemple en un élastomère tel que l'E.P.D.M. ou en un matériau thermoplastique.

Le matériau à fort retrait au refroidissement peut être, par exemple, un élastomère tel qu'un E.P.D.M., ou un matériau thermoplastique, de préférence de dureté élevée, qui a généralement un retrait plus important.

Comme indiqué ci-dessus, le matériau à fort retrait au refroidissement rapporté sur le profilé peut avoir une épaisseur localement accrue, en vue d'accroître localement la contrainte exercée sur le profilé. Dans le même but, il peut aussi comporter une excroissance locale.

D'autres caractéristiques et avantages de l'invention apparaîtront dans la description détaillée qui va suivre de diverses formes de réalisation d'un tel profilé. Dans cette description, on se réfèrera aux dessins annexés, dans lesquels :
La figure 1 est une vue latérale schématique d'une première forme de réalisation du joint d'étanchéité pour ouvrant de porte d'automobile conforme à l'invention, dans sa position d'utilisation sur un encadrement d'ouvrant ;
Les figures 2, 3, 4 et 5 sont des sections transversales du joint de la figure 1, respectivement suivant les lignes II-II, III-III, IV-IV et V-V de cette figure 1 ;
La figure 6 illustre le profil latéral d'une seconde forme de réalisation d'un joint d'étanchéité conforme à l'invention, pour ouvrant de porte de véhicule automobile ;
Les figures 7, 8, 9 et 10, sont des coupes transversales du joint, dans les angles de celui-ci, selon les lignes de coupe VII-VII, VIII-VIII, IX-IX et X-X de la figure 6.
La figure 11 est une vue en perspective d'un joint tubulaire conforme à l'invention ;
Les figures 12 et 13 sont des coupes transversales, respectivement suivant les lignes XII-XII et XIII-XIII de la figure 5.

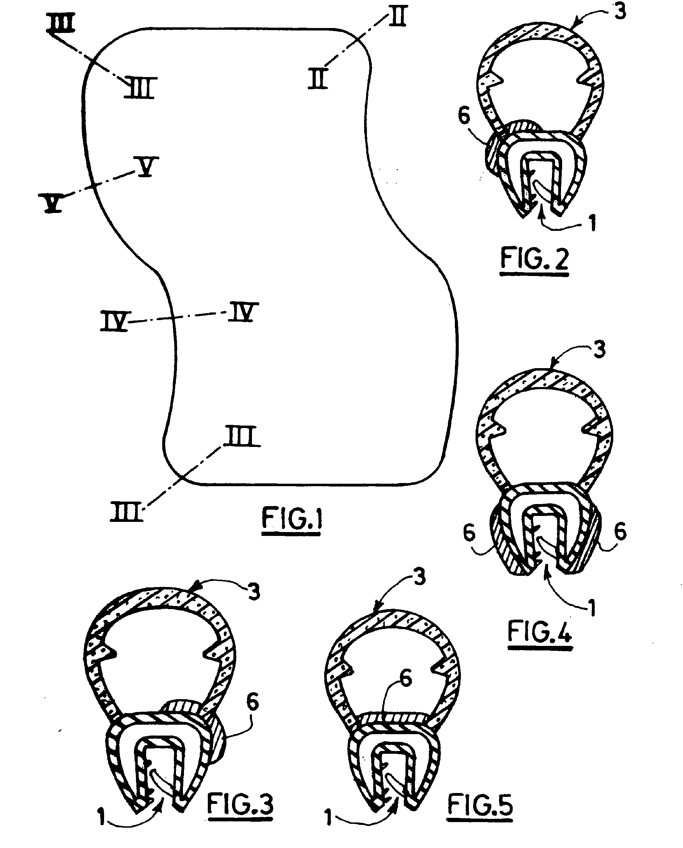

On se réfèrera d'abord aux figures 1 à 5, qui représentent un joint d'étanchéité comprenant :
- une partie formant pince 1, à section transversale en U, destinée ici à coiffer en la pinçant une partie saillante d'un encadrement d'ouvrant d'automobile, non représenté ;
- et un élément tubulaire 3, constituant l'organe d'étanchéité, attenant à la base de la section en U de la partie 1 et faisant saillie par rapport à cette base du côté opposé aux branches du U, pour être comprimé, en position de fermeture de l'ouvrant, entre celui-ci et l'encadrement associé.

La partie formant pince 1 est ici constituée par un corps creux à section transversale en U, en un élastomère, par exemple en E.P.D.M., éventuellement empli d'un matériau cellulaire, mais dépourvu d'armature de renfort.

L'élément tubulaire 3 est par exemple en caoutchouc cellulaire. Il est percé à intervalles réguliers d'orifices, non représentés, mettant l'intérieur de cet élément en communication avec l'atmosphère ambiante.

Conformément à l'invention, la partie formant pince 1 comporte, en des zones de sa surface externe variant avec l'emplacement de cette partie sur l'encadrement qu'elle équipe ou en fonction de la forme à conférer au profilé, une couche 6 la gainant localement d'un matériau qui, après avoir été chauffé en même temps que la pince, subit au refroidissement un retrait beaucoup plus important que celui constituant cette pince. En se refroidissant, le matériau de la couche 6 exerce ainsi sur la section une contrainte locale apte à la déformer, en vue par exemple pour la pince 1 de lui faire épouser, avant mise en place sur l'encadrement qu'elle doit équiper, une forme proche de celle de cet encadrement, ce qui facilite ainsi grandement sa mise en place.

Ce matériau à fort retrait au refroidissement peut être, par exemple, de l'E.P.D.M. ou un matériau thermoplastique.

Ce matériau est coextrudé avec le profilé formant pince 1 et le profilé tubulaire 3, et la distribution locale de ce matériau sur la surface externe de la section sera adaptée au profil à conférer à cette section par le chauffage et le refroidissement consécutif de l'ensemble de la pièce, à l'issue des opérations usuelles d'extrusion ou de vulcanisation.

Dans le cas du joint représenté en position d'utilisation sur la figure 1, on voit que, dans les angles supérieur et inférieur de l'encadrement de porte situés sur la partie gauche du dessin, la couche 6 du matériau à fort retrait au refroidissement s'étend sur la partie de la pince 1 formant jonction entre la branche droite du U et la base de ce U, de part et d'autre de la ligne de raccordement à cette base d'une partie latérale du profilé tubulaire 3 (voir figure 3), de manière à obtenir au refroidissement une courbure de la pince du côté de cette couche 6.

Inversement, dans l'angle supérieur droit de l'encadrement de porte, la couche 6 de matériau à fort retrait au refroidissement s'étend sur la surface externe de la partie de la pince 1 servant de jonction entre la branche gauche du U de cette pince et la base de ce U, de part et d'autre de la partie latérale correspondante du profilé tubulaire 3 (voir figure 2), de manière à obtenir au refroidissement une courbure de la pince du côté de cette couche 6.

A mi-distance entre l'angle inférieur gauche et l'angle supérieur gauche de l'encadrement de porte (voir figure 4), la couche 6 du matériau à fort retrait au refroidissement recouvre la face externe des deux branches du U de la partie formant pince 1, tandis qu'à mi-distance entre la position de la figure 4 et l'angle supérieur gauche de l'encadrement (voir figure 5), la couche 6 du matériau à fort retrait recouvre la face de la partie en U formant pince 1 tournée vers l'intérieur de la partie tubulaire 3.

On retrouve des modifications équivalentes adaptées aux buts recherchés sur la partie du joint s'étendant entre l'angle supérieur droit et l'angle inférieur droit de l'encadrement de porte.

Comme indiqué ci-dessus, toute autre répartition du matériau à fort retrait au refroidissement sur la pince 1 et toute variation d'épaisseur peuvent être envisagées, en fonction du profil de l'encadrement de porte, de coffre ou autre à équiper de la pince, avec éventuellement des protubérances locales.

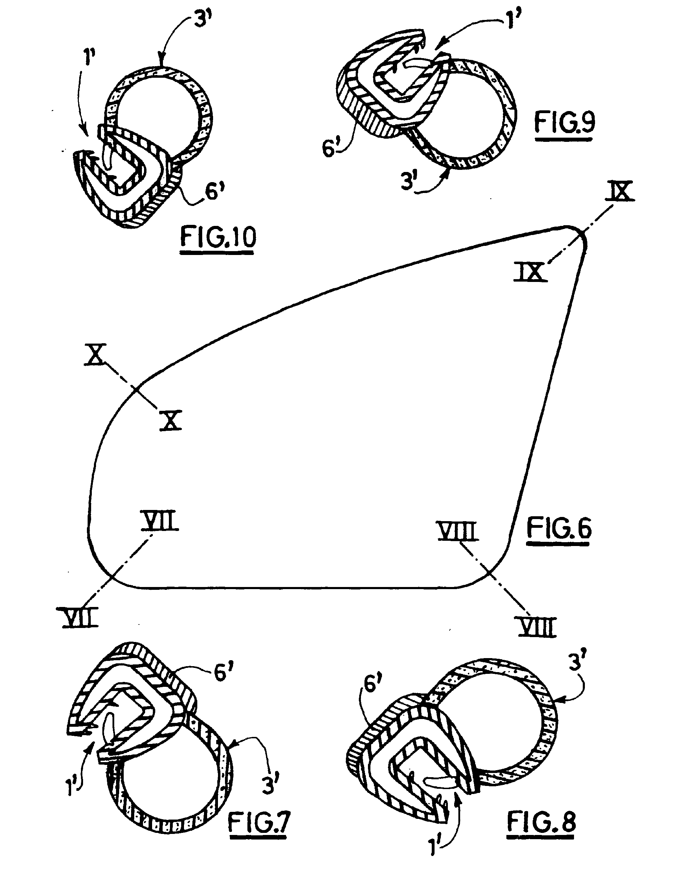

Les figures 7 à 10 illustrent une autre forme de réalisation d'un joint d'ouvrant de véhicule d'automobile conforme à l'invention, comprenant comme précédemment une partie à section en U, 1', destinée à coiffer en le pinçant une partie saillante de l'ouvrant ou de son encadrement, et une partie tubulaire 3', ici attenante à une branche latérale du U de la pince 1', variable suivant les positions angulaires de la pince 1', à partir de laquelle elle fait saillie latéralement. Les parties 1' et 3' sont fabriquées par coextrusion.

Conformément à l'invention, le matériau 6' à fort retrait au refroidissement, coextrudé avec les parties 1' et 3', est appliqué sur la face externe de la base de la partie 1' en U et déborde latéralement sur la face externe de la portion contiguë de la partie 3' au niveau où celle-ci se raccorde à la branche associée de la partie 1', de manière à exercer lors du refroidissement des matériaux, après extrusion ou vulcanisation, une forte contrainte sur ces portions des parties 1' et 3' et de leur imprimer la courbure désirée dans les parties des angles de l'ouvrant.

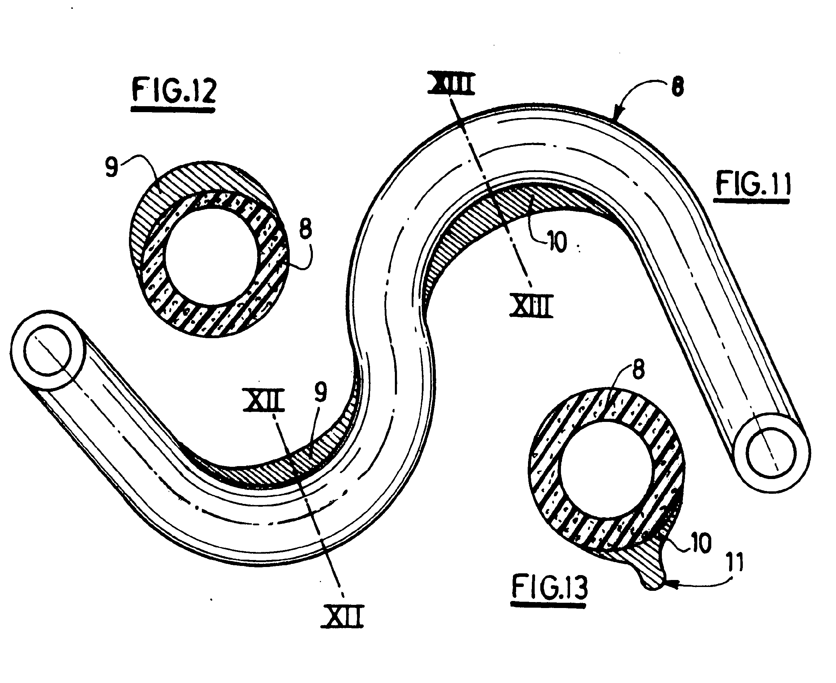

Comme indiqué ci-dessus, l'invention peut s'appliquer également à des types de profilés complètement différents de ceux qui viennent d'être décrits, par exemple à un profilé tubulaire, comme illustré par les figures 11 à 13 des dessins.

Dans cette forme de réalisation, le profilé tubulaire 8, en E.P.D.M. par exemple, qui comporte deux parties recourbées en sens inverse formant un S a été réalisé en appliquant, à chaud, sur la face externe des parties de ce profilé destinées à être recourbées, une couche 9, respectivement 10, d'un matériau à fort retrait au refroidissement, un matériau thermoplastique par exemple.

Comme on le voit sur les figures 12 et 13, la couche 10 de ce matériau à fort retrait au refroidissement a une épaisseur variable localement et elle peut comporter une partie 11 en saillie, tendant à déporter par rapport à l'axe de la partie tubulaire 8 le centre de gravité de la section considérée.

L'invention apporte donc un moyen simple et facile à mettre en oeuvre pour conférer une forme particulière à un profilé en plastomère ou élastomère, destiné en particulier à équiper un ouvrant d'un véhicule automobile ou l'encadrement de cet ouvrant.

## Revendications

1. Procédé de fabrication par extrusion d'un profilé (1, 1', 8) en au moins un élastomère ou un plastomère, dépourvu d'armature de renfort et destiné à équiper un ouvrant ou un encadrement d'ouvrant, notamment d'un véhicule automobile, ce procédé étant **caractérisé en ce qu**'avec ce profilé est coextrudé un matériau (6, 6', 9, 10) en plastomère ou en élastomère qui recouvre localement la surface externe du profilé et présente au refroidissement, soit après la phase de coextrusion, soit après une phase ultérieure de chauffage, par exemple une phase de vulcanisation, un retrait au refroidissement sensiblement supérieur à celui de matériau dont est constitué le profilé et apte à conférer à ce dernier une contrainte telle qu'après refroidissement, il se courbe localement en adoptant ainsi une forme proche de celle que l'on souhaite lui conférer.

2. Procédé selon la revendication précédente, **caractérisé en ce que** le matériau (6, 6', 9, 10) à fort retrait au refroidissement est extrudé de manière à présenter une ou des variations locales d'épaisseur.

3. Procédé selon l'une des revendications 1 et 2, **caractérisé en ce que** le matériau (6, 6', 9, 10) à fort retrait au refroidissement est extrudé de manière à présenter une ou des excroissances locales.

4. Procédé selon l'une des revendications 1 à 3, **caractérisé en ce que** le profilé (1, 1', 8) est en un élastomère tel que l'E.P.D.M. ou en un matériau thermoplastique.

5. Procédé selon l'une des revendications 1 à 3, **caractérisé en ce que** le matériau (6, 6', 9, 10) à fort retrait au refroidissement est un élastomère tel que l'E.P.D.M. ou en un matériau thermoplastique, de préférence de dureté élevée.

6. Profilé en au moins un élastomère ou un plastomère dépourvu d'armature de renfort et destiné à équiper un ouvrant ou un encadrement d'ouvrant, notamment d'un véhicule automobile, ce profilé (1, 1', 8) étant **caractérisé en ce qu'**il comporte en un ou des emplacements localisés de sa surface externe un matériau (6, 6', 9, 10) en un plastomère ou un élastomère venu de coextrusion avec le profilé et présentant après le chauffage associé à l'extrusion ou après une phase de chauffage ultérieure, par exemple de vulcanisation, un retrait au refroidissement sensiblement supérieur à celui du profilé.

7. Profilé formant pince (1) selon la revendication 6, à section transversale en U ou en Ω, auquel est attenant suivant la base du U ou de l'Ω un profilé tubulaire (3) d'étanchéité, **caractérisé en ce que** le matériau (6) à fort retrait au refroidissement est appliqué sur la face externe au moins d'une partie des deux branches du U ou de l'Ω.

8. Profilé formant pince (1) suivant la revendication 6, à section transversale en U ou en Ω, auquel est attenant suivant la base du U ou de l'Ω, un profilé tubulaire (3) d'étanchéité, **caractérisé en ce que** le matériau (6) à fort retrait au refroidissement est appliqué sur la face externe de la base du U ou de l'Ω du profilé (1) formant pince, à l'intérieur du profilé tubulaire (3) d'étanchéité, ou encore sur une face externe du U ou de l'Ω du profilé formant pince (1), de part et d'autre de l'une des lignes de raccordement du profilé tubulaire (3) à ce profilé formant pince.

9. Profilé formant pince (1') selon la revendication 6, à section transversale en U ou en Ω, auquel un profilé tubulaire d'étanchéité (3') est attenant à une branche du U ou de l'Ω, **caractérisé en ce que** le matériau (6') à fort retrait au refroidissement est appliqué sur la base du U ou de l'Ω et déborde latéralement sur la face externe de la portion contiguë du profilé tubulaire (3'), au niveau où celui-ci se raccorde à la branche associée de la partie formant pince.

10. Profilé tubulaire (8) selon la revendication 6, **caractérisé en ce que** le matériau à fort retrait au refroidissement (9, 10) est appliqué en un emplacement de la surface externe pour imprimer au profilé une courbure en cet emplacement.

11. Profilé selon l'une des revendications 6 à 10, **caractérisé en ce que** le matériau à fort retrait au refroidissement présente des variations locales d'épaisseur.

12. Profilé selon l'une des revendications 6 à 11, **caractérisé en ce que** le matériau à fort retrait au refroidissement présente une ou des excroissances locales.

13. Profilé selon l'une des revendications 6 à 12, **caractérisé en ce que** le profilé est en un élastomère tel que l'E.P.D.M. ou en un matériau thermoplastique.

14. Profilé selon l'une des revendications 6 à 13, **caractérisé en ce que** le matériau à fort retrait au refroidissement est en un élastomère tel que l'E.P.D.M. ou en un matériau thermoplastique, de préférence de dureté élevée.

## Claims

1. Process for manufacturing, by extrusion, a section (1, 1', 8) made of at least one elastomer or plastomer, devoid of any reinforcing structure and intended to equip an opening or a frame for an opening, especially of a motor vehicle, this process being **characterized in that** coextruded with this section is a material (6, 6', 9, 10) made of a plastomer or elastomer which locally covers the outer surface of the section and has on cooling, either after the coextrusion phase, or after a subsequent heating phase, for example a vulcanization phase, a shrinkage on cooling substantially greater than that of the material of which the section is composed and capable of imparting to the latter a stress such that after cooling it is locally bent thus adopting a shape close to that which it is desired to give it.

2. Process according to the preceding claim, **characterized in that** the material (6, 6', 9, 10) having a high shrinkage on cooling is extruded so as to have one or more local variations in thickness.

3. Process according to either of Claims 1 and 2, **characterized in that** the material (6, 6', 9, 10) having a high shrinkage on cooling is extruded so as to have one or more local excrescences.

4. Process according to one of Claims 1 to 3, **characterized in that** the section (1, 1', 8) is made of an elastomer such as EPDM or of a thermoplastic material.

5. Process according to one of Claims 1 to 3, **characterized in that** the material (6, 6', 9, 10) having a high shrinkage on cooling is made of an elastomer such as EPDM or of a thermoplastic material, preferably of high hardness.

6. Section made of at least one elastomer or plastomer, devoid of any reinforcing structure and intended to equip an opening or a frame for an opening, especially of a motor vehicle, this section (1, 1', 8) being **characterized in that** it has, at one or more localized sites on its outer surface, a material (6, 6', 9, 10) made of a plastomer or an elastomer resulting from coextrusion with the section and having, after the heating associated with the extrusion or after a subsequent heating phase, for example a vulcanization phase, a shrinkage on cooling substantially greater than that of the section.

7. Section that forms a clip (1) according to Claim 6, having a U-shaped or Ω-shaped cross-section, to which is joined, along the base of the U or of the Ω, a tubular sealing section (3), **characterized in that** the material (6) having a high shrinkage on cooling is applied to the outer face of at least one part of the two arms of the U or of the Ω.

8. Section that forms a clip (1) according to Claim 6, having a U-shaped or Ω-shaped cross-section, to which is joined, along the base of the U or of the Ω, a tubular sealing section (3), **characterized in that** the material (6) having a high shrinkage on cooling is applied to the outer face of the base of the U or of the Ω of the section (1) that forms a clip, to the inside of the tubular sealing section (3), or else to an outer face of the U or of the Ω of the section that forms a clip (1), on both sides of one of the lines for attachment of the tubular section (3) to this section that forms a clip.

9. Section that forms a clip (1') according to Claim 6, having a U-shaped or Ω-shaped cross-section, to which a tubular sealing section (3') is joined at one arm of the U or of the Ω, **characterized in that** the material (6') having a high shrinkage on cooling is applied to the base of the U or of the Ω and sticks out sideways over the outer face of the contiguous portion of the tubular section (3'), where the latter is attached to the associated arm of the part that forms a clip.

10. Tubular section (8) according to Claim 6, **characterized in that** the material having a high shrinkage on cooling (9, 10) is applied to one site of the outer surface in order to impart a curve to the section at this site.

11. Section according to one of Claims 6 to 10, **characterized in that** the material having a high shrinkage on cooling has local variations in thickness.

12. Section according to one of Claims 6 to 11, **characterized in that** the material having a high shrinkage on cooling has one or more local excrescences.

13. Section according to one of Claims 6 to 12, **characterized in that** the section is made of an elastomer such as EPDM or of a thermoplastic material.

14. Section according to one of Claims 6 to 13, **characterized in that** the material having a high shrinkage on cooling is made of an elastomer such as EPDM or of a thermoplastic material, preferably of high hardness.

## Patentansprüche

1. Verfahren zur Herstellung eines Profils (1, 1', 8) durch Extrusion aus wenigstens einem Elastomer oder Plastomer, wobei das Profil keine Verstärkungsarmierung aufweist und zur Ausrüstung einer Öffnung oder eines Öffnungsrahmens, insbesondere eines Kraftfahrzeugs, bestimmt ist, **dadurch gekennzeichnet, dass**
zusammen mit dem Profil ein Material (6, 6', 9, 10) aus Plastomer oder Elastomer koextrudiert ist, das lokal die äußere Oberfläche des Profils bedeckt und bei Abkühlung, entweder nach dem Koextrusionsschritt oder nach einem späteren Erwärmungsschritt, beispielsweise einem Vulkanisationsschritt, eine Schrumpfung bei Abkühlung aufweist, die im Wesentlichen größer ist als die des Materials, aus dem das Profil gebildet ist, und die dazu geeignet ist, diesem eine mechanische Spannung derart aufzuerlegen, dass das Profil sich bei Abkühlung lokal biegt und **dadurch** eine Form nahe jener, die man ihm auferlegen will, annimmt.

2. Verfahren nach dem voranstehenden Anspruch, **dadurch gekennzeichnet, dass** das Material (6, 6', 9, 10) mit starker Schrumpfung bei Abkühlung so extrudiert ist, dass es eine oder mehrere lokale Dickenschwankungen aufweist.

3. Verfahren nach einem der Ansprüche 1 und 2, **dadurch gekennzeichnet, dass** das Material (6, 6', 9, 10) mit starker Schrumpfung bei Abkühlung so extrudiert ist, dass es eine oder mehrere Ausstülpungen aufweist.

4. Verfahren nach einem der Ansprüche 1 bis 3, **dadurch gekennzeichnet, dass** das Profil (1, 1', 8) aus einem Elastomer wie beispielsweise EPDM oder aus einem thermoplastischen Material ist.

5. Verfahren nach einem der Ansprüche 1 bis 3, **dadurch gekennzeichnet, dass** das Material (6, 6', 9, 10) mit starker Schrumpfung bei Abkühlung ein Elastomer wie beispielsweise EPDM oder ein thermoplastisches Material, bevorzugt mit hoher Härte, ist.

6. Profil aus wenigstens einem Elastomer oder Plastomer, das frei von einer Verstärkungsarmierung ist, zum Ausrüsten einer Öffnung oder eines Öffnungsrahmens, insbesondere eines Kraftfahrzeugs, wobei das Profil (1, 1', 8) **dadurch gekennzeichnet ist, dass** es an einer oder mehreren Stellen seiner Außenfläche lokal ein Material (6, 6', 9, 10) aus einem Plastomer oder Elastomer aufweist, das mit dem Profil koextrudiert ist und das nach der mit der Koextrusion einhergehenden Erwärmung oder nach einem späteren Erwärmungsschritt, beispielsweise bei Vulkanisation, eine Schrumpfung bei Abkühlung aufweist, die im Wesentlichen größer als die des Profils ist.

7. Klemmprofil (1) nach Anspruch 6, mit einem U- oder Ω-förmigen Querschnitt, an dem ein röhrenartiges Dichtungsprofil (3), das der Basis des U oder des Ω folgt, anliegt, **dadurch gekennzeichnet, dass** das Material (6) mit starker Schrumpfung bei Abkühlung auf wenigstens einen Teil der Außenfläche der Arme des U oder des Ω aufgebracht ist.

8. Klemmprofil (1) nach Anspruch 6, mit einem U- oder Ω-förmigen Querschnitt, an dem ein röhrenartiges Dichtungsprofil (3), das der Basis des U oder des Ω folgt, anliegt, **dadurch gekennzeichnet, dass** das Material mit starker Schrumpfung bei Abkühlung (6) auf die äußere Oberfläche der Basis des U oder des Ω des Klemmprofils (1), das Innere des röhrenförmigen Dichtungsprofils (3) oder auch auf eine Außenfläche des U oder des Ω des Klemmprofils (1), auf beiden Seiten einer der Verbindungslinien des röhrenförmigen Profils (3) zu dem Klemmprofil aufgebracht ist.

9. Klemmprofil (1') nach Anspruch 6, mit einem U- oder Ω-förmigen Querschnitt, wobei ein röhrenförmiges Dichtungsprofil (3') an einem Arm des U oder des Ω anliegt, **dadurch gekennzeichnet, dass** das Material mit starker Schrumpfung bei Abkühlung auf die Basis des U oder des Ω aufgebracht ist und lateral auf der Außenseite des durchgehenden Abschnitts des röhrenförmigen Profils (3') auf der Höhe übersteht, auf der dieses Profil mit dem zugeordneten Arm des Klemmabschnitts verbunden ist.

10. Röhrenprofil (8) nach Anspruch 6, **dadurch gekennzeichnet, dass** das Material mit starker Schrumpfung bei Abkühlung (9, 10) an einem Ort auf der Außenfläche aufgebracht ist, um dem Profil an dieser Stelle eine Biegung einzuprägen.

11. Profil nach einem der Ansprüche 6 bis 10, **dadurch gekennzeichnet, dass** das Material mit starker Schrumpfung bei Abkühlung lokale Dickenschwankungen aufweist.

12. Profil nach einem der Ansprüche 6 bis 11, **dadurch gekennzeichnet, dass** das Material mit starker Schrumpfung bei Abkühlung eine oder mehrere lokale Ausstülpungen aufweist.

13. Profil nach einem der Ansprüche 6 bis 12, **dadurch gekennzeichnet, dass** das Profil aus einem Elastomer wie beispielsweise EPDM oder aus einem thermoplastischen Material ist.

14. Profil nach einem der Ansprüche 6 bis 13, **dadurch gekennzeichnet, dass** das Material mit starker Schrumpfung bei Abkühlung ein Elastomer wie beispielsweise EPDM oder ein thermoplastisches Material, vorzugsweise mit hoher Härte, ist.
